Europäisches Patentamt

European Patent Office

Office européen des brevets

(19)

(11) EP 0 676 428 B1

(12) EUROPEAN PATENT SPECIFICATION

(45) Date of publication and mention
of the grant of the patent:
**03.02.1999 Bulletin 1999/05**

(51) Int Cl.⁶: **C08G 18/38**

(21) Application number: **95302123.5**

(22) Date of filing: **29.03.1995**

(54) **Composition for low-specific gravity urethane-base plastic lens**

Zusammensetzung für Kunststofflinsen mit niedrigem spezifischem Gewicht auf Urethanbasis

Composition pour lentilles en matière plastique à faible densité à base de polyuréthane

(84) Designated Contracting States:
**DE FR GB IT**

(30) Priority: **06.04.1994 JP 68479/94**

(43) Date of publication of application:
**11.10.1995 Bulletin 1995/41**

(73) Proprietor: **MITSUI CHEMICALS, INC.**
**Tokyo (JP)**

(72) Inventors:
• **Okazaki, Koju**
**Ohmuta-shi, Fukuoka-ken (JP)**
• **Kanemura, Yoshinobu**
**Ohmuta-shi, Fukuoka-ken (JP)**
• **Nagata, Teruyuki**
**Ohmuta-shi, Fukuoka-ken (JP)**

(74) Representative: **Stuart, Ian Alexander et al**
**MEWBURN ELLIS**
**York House**
**23 Kingsway**
**London WC2B 6HP (GB)**

(56) References cited:
**EP-A- 0 586 091**          **US-A- 4 689 387**

**Description**

BACKGROUND OF THE INVENTION

The present invention relates to a low-specific gravity urethane-base plastic lens preferably having good optical properties and excellent impact resistance which are required for various kinds of optical lenses such as lenses for spectacles, and it also relates to a process for preparing the lens and to a composition therefor.

In recent years, plastics have rapidly spread as materials for optical elements such as lenses for spectacles and cameras, because they are light-weight and more difficult to break as compared with inorganic lenses and they can also be dyed. Nowadays, as a resin which has been widely used for these purposes, there is a product obtained by the radical polymerization of diethylene glycol bis(allyl carbonate) (hereinafter referred to as "D.A.C."). This resin has some features, for example, it is excellent in impact resistance, dyeing properties and workability of cutting, polishing and the like, and it is also light-weight.

However, the refractive index of this resin is as low as $n_d = 1.50$, as compared with a glass lens ($n_d = 1.52$), and in order to obtain equivalent optical properties to the glass lens, it is necessary to increase the central thickness, the edge thickness and a curvature of the lens. Therefore, it is not avoidable that the lens of this resin becomes thick on the whole. Accordingly, a plastic lens has been desired which has excellent characteristics corresponding to those of D.A.C. and a refractive index higher than the inorganic lens.

As a lens which can meet these requirements, a polyurethane plastic lens is known. As this polyurethane lens, the present inventors have already suggested a polyurethane lens made of a polymer of a xylylene diisocyanate compound and a polythiol compound, for example, in Japanese Patent Application Laid-open No. 63-46213 (46213/1988), and this kind of polyurethane lens is now spreading as optical lenses such as lenses for spectacles.

However, the reduction of the specific gravity of the lenses has been presently required in addition to the above-mentioned physical properties, and in reply to this further requirement, the present inventors have already suggested a urethane-base plastic lens made from isophorone diisocyanate (hereinafter abbreviated to "IPDi") and 1,2-bis (2-mercaptoethylthio)-3-mercaptopropane (hereinafter abbreviated to "GST") in Japanese Patent Application Laid-open No. 2-270859 (270859/1990).

The specific gravity of the plastic lens made from IPDi and GST is 1.23, which specific gravity is much lower than in the conventional urethane-base plastic lens. Nevertheless, this plastic lens does not sufficiently meet the requirement of the further reduction of the specific gravity.

Hence, the development of the urethane-base plastic lens having the further low specific gravity has strongly been desired.

US-A-4 689 387 discloses lens resins obtained by reacting one or more NCO compounds (e.g. hexamethylene diisocyanate) with one or more specified SH-containing aliphatic compounds (e.g. di(2 mercaptoethyl) sulfide). Exemplified lenses produced according to the invention had specific gravities in the range 1.30-1.44.

Preferred embodiments of the present invention may provide one or more of the following objects:

   a low-specific gravity urethane-base plastic lens having excellent optical properties by reducing the specific gravity of the plastic lens;
   a composition for the urethane-base plastic lens which can be used to obtain this low-specific gravity urethane-base plastic lens;
   a process for preparing the plastic lens by the use of this composition.

The present inventors have intensively investigated and as a result, it has been found that when the following process is used, a urethane-base plastic lens having excellent optical properties and a low specific gravity of 1.22 or less can be surprisingly obtained. In consequence, the present invention has now been attained.

That is to say, a first aspect of the present invention is directed to a composition for a low-specific gravity urethane-base plastic lens which comprises an isocyanate compound and an active hydrogen compound selected so as to meet the formula (1)

$$\frac{(A1 + kA2)D1 \times D2}{A1 \times D2 + kA2 \times D1} \leq 1.136 \tag{1}$$

wherein

$$A1 = \frac{A1\text{-}M}{A1\text{-}N}$$

A1-M: the molecular weight of the isocyanate compound, and
A1-N: the number of the functional group of the isocyanate compound,

$$A2 = \frac{A2\text{-}M}{A2\text{-}N}$$

A2-M: the molecular weight of the active hydrogen compound, and
A2-N: the number of the functional group of the active hydrogen compound,

D1 = the specific gravity of the isocyanate compound,
D2 = the specific gravity of the active hydrogen compound, and

$$k = \frac{\text{mole number of an active hydrogen group}}{\text{mole number of the isocyanate group.}}$$

The isocyanate compound is one or more compounds selected from isophorone diisocyanate, dicyclohexylmethane diisocyanate, trimethylhexamethylene diisocyanate, hexamethylene diisocyanate, $\alpha,\alpha,\alpha',\alpha'$-tetramethylxy-lylene diisocyanate and these isocyanates when modified with biuret and trimerized.

A second aspect of the present invention is directed to a process for preparing a low-specific gravity urethane-base resin plastic lens which comprises the steps of mixing and then heating the composition to harden the same.

A third aspect of the present invention is directed to a plastic lens obtained by the preparation process.

The above-mentioned isocyanate compound and active hydrogen compound may be used in the state of a mixture of separately two or more kinds thereof, and in this case, A1, D1, A2 and D2 are weighted averages of each mixture.

Next, the present invention will be described in detail.

A composition for lenses of the present invention comprises one or more isocyanate compounds selected from those listed above, and one or more active hydrogen compounds preferably selected from hydroxy compounds and mercapto compounds which may have a hydroxy group.

Examples of the active hydrogen compounds which can be used in the present invention are as follows.

Examples of hydroxy compounds include alcohols such as methanol, ethanol, isopropyl alcohol, butanol, benzyl alcohol, phenol, phenylphenol, ethoxyethanol, methoxypropanol, ethoxypropanol; aliphatic polyols such as ethylene glycol, diethylene glycol, triethylene glycol, tetraethylene glycol, propylene glycol, dipropylene glycol, butylene glycol, neopentyl glycol, glycerin, trimethylolethane, trimethylolpropane, butanetriol, 1,2-methylglycoside, pentaerythritol, dipentaerythritol, tripentaerythritol, sorbitol, erythritol, threitol, ribitol, arabinitol, xylitol, allitol, mannitol, dulcitol, iditol, glycol, inositol, hexanetriol, triglycerol, diglycerol, triethylene glycol, polyethylene glycol, tris(2-hydroxyethyl) isocyanurate, cyclobutanediol, cyclopentanediol, cyclohexanediol, cycloheptanediol, cyclooctanediol, cyclohexanedimethanol, hydroxypropylcyclohexanol, tricyclo[5.2.1.0.2.6]decanedimethanol, bicyclo[4.3.0]-nonanediol, dicyclohexanediol, tricyclo[5.3.1.1]-dodecanediol, bicyclo[4.3.0]nonanedimethanol, tricyclo[5.3.1.1]dodecanediethanol, hydroxypropyltricyclo[5.3.1.1]dodecanol, spiro[3.4]octanediol, butylcyclohexanediol, 1,1'-bicyclohexylidenediol, cyclohexanetriol, multitol and lactitol; aromatic polyols such as dihydroxynaphthalene, trihydroxynaphthalene, tetrahydroxynaphthalene, dihydroxybenzene, benzenetriol, biphenyltetraol, pyrogallol, (hydroxynaphthyl)pyrogallol, trihydroxyphenanthrene, bisphenol A, bisphenol F, xylylene glycol, di(2-hydroxyethoxy)benzene, bisphenol A-bis(2-hydroxy ethyl ether), tetrabromobisphenol A and tetrabromobisphenol A-bis(2-hydroxy ethyl ether); halogenated polyols such as dibromoneopentyl glycol; high-molecular weight polyols such as an epoxy resin; condensation reaction products of the above-mentioned polyols with oragnic acids such as oxalic acid, glutamic acid, adipic acid, acetic acid, propionic acid, cy-clohexanecarboxylic acid, $\beta$-oxocyclohexanepropionic acid, dimer acids, phthalic acid, isophthalic acid, salicylic acid, 3-bromopropionic acid, 2-bromoglycol, dicarboxycyclohexane, pyromellitic acid, butanetetracarbo-xylic acid and bromophthalic acid; addition reaction products of the above-mentioned polyols and alkylene oxides such as ethylene oxide and propylene oxide; addition reaction products of alkylene polyamines and alkylene oxides such as ethylene oxide and propylene oxide; sulfur atom-containing polyols such as bis[4-(hydroxyethoxy)phenyl] sulfide, bis[4-(2-hydroxypropoxy)phenyl] sulfide, bis[4-(2,3-dihydroxypropoxy)phenyl] sulfide, bis[4-(4-hydroxycyclohexyloxy)phenyl] sulfide, bis[2-methyl-4-(hydroxyethoxy)-6-butylphenyl] sulfide and compounds obtained by adding 3 or less molecules of ethylene oxide and/or propylene oxide per hydroxyl group on the average to these compounds, di(2-hydroxyethyl) sulfide, 1,2-bis(2-hydroxyethylmercapto)-ethane, bis(2-hydroxyethyl) disulfide, 1,4-dithian-2,5-diol, bis(2,3-dihydroxypropyl) sulfide, tetrakis(4-hydroxy-2-thiabutyl)-methane, bis(4-hydroxyphenyl)sulfone (trade name Bisphenol S), tetrabromobisphenol S, tetramethylbisphenol S, 4,4'-thiobis(6-tert-butyl-3-methylphenol), 3,6-dithiaoctane-1,8-diol and 1,3-bis(2-hydroxyethylthioethyl)-cyclohexane.

Examples of mercapto compounds include monothiols such as methyl mercaptan, ethyl mercaptan, thiophenol and benzylthiol; aliphatic or alicyclic polythiols such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl) methane, 1,1-cyclohexanedithiol, 1,2-cyclohexanedithiol, 2,2-dimethylpropane-1,3-dithiol, 3,4-dimethoxybutane-1,2-dithiol, 3,6-dioxaoctane-1,8-dimercaptane, 2-methylcyclohexane-2,3-dithiol, bicyclo[2.2.1]hepta-exo-cis-2,3-dithiol, l,l-bis(mercaptomethyl)-cyclohexane, thiomalic acid bis(2-mercaptoethyl ester), 2,3-dimercaptosuccinic acid (2-mercaptoethyl ester) , 2,3-dimercapto-l-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris (2-mercaptoacetate), trimethylolpropane tris(3-mercaptopropionate), pentaerythritol tetrakis(2-mercaptoacetate), pentaerythritol tetrakis(3-mercaptopropionate) and 1,2-bis(2-mercaptoethylthio)-3-mercaptopropane; aromatic polythiols such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2-bis(mercaptomethyleneoxy)benzene, 1,3-bis(mercaptomethyleneoxy)benzene, 1,4-bis(mercaptomethyleneoxy)benzene, 1,2-bis(mercaptoethyleneoxy)benzene, 1,3-bis(mercaptoethyleneoxy)benzene, 1,4-bis(mercaptoethyleneoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris-(mercaptoethyl)benzene, 1,3,5-tris(mercaptoethyl)benzene, 1,2,3-tris(mercaptomethyleneoxy)benzene, 1,2,4-tris(mercaptomethyleneoxy)benzene, 1,3,5-tris (mercaptomethyleneoxy)-benzene, 1,2,3-tris(mercaptoethyleneoxy)benzene, 1,2,4-tris(mercaptoethyleneoxy)benzene, 1,3,5-tris(mercaptoethyleneoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis-(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl) benzene, 1,2,4,5-tetrakis(mercaptoethyl)benzene, 1,2,3,4-tetrakis(mercaptoethyl)benzene, 1,2,3,5-tetrakis(mercaptomethyleneoxy)benzene, 1,2,4,5-tetrakis(mercaptomethyleneoxy)benzene, 1,2,3,4-tetrakis-(mercaptoethyleneoxy) benzene, 1,2,3,5-tetrakis(mercapto-ethyleneoxy)benzene, 1,2,4,5-tetrakis(mercaptoethylene-oxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalene-dithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methoxy-phenyl)propane-2,2-dithiol, 1,3-diphenylpropane-2,2-dithiol, phenylmethane-1,1-dithiol and 2,4-di(p-mercaptophenyl)pentane; halogen-substituted aromatic polythiols, i.e., chlorine-substituted and bromine-substituted polythiols such as 2,5-dichlorobenzene-1,3-dithiol, 1,3-di(p-chlorophenyl)propane-2,2-dithiol, 3,4,5-tribromo-1,2-dimercaptobenzene and 2,3,4,6-tetrachloro-1,5-bis(mercaptomethyl)benzene; heterocyclic ring-containing polythiols such as 2-methylamino-4,6-dithiol-sym-triazine, 2-ethylamino-4,6-dithiol-sym-triazine, 2-amino-4,6-dithiol-sym-triazine, 2-morpholino-4,6-dithiol-sym-triazine, 2-cyclohexyl-amino-4,6-dithiol-sym-triazine, 2-methoxy-4,6-dithiol-sym-triazine, 2-phenoxy-4,6-dithiol-sym-triazine, 2-thiobenzeneoxy-4,6-dithiol-sym-triazine and 2-thiobutyloxy-4,6-dithiol-sym-triazine; aromatic polythiols containing a sulfur atom in addition to the mercapto group such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptoethylthio)benzene, 1,2,3,4-tetrakis(mercaptoethylthio)benzene, 1,2,3,5-tetrakis(mercaptoethylthio)benzene, 1,2,4,5-tetrakis(mercaptoethylthio) benzene, bis(4-mercaptophenyl) sulfide and alkylated compounds thereof; aliphatic polythiols having one or more sulfur atoms in addition to the mercapto group such as bis(mercaptomethyl) sulfide, bis(mercaptoethyl) sulfide, bis (mercaptopropyl) sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris (mercaptomethylthio)propane, 1,2,3-tris(2-mercaptoethylthio)propane, 1,2,3-tris(3-mercaptopropylthio)propane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, 2,5-dimercapto-1,4-dithian, bis(mercaptomethyl) disulfide, bis (mercaptoethyl) disufide, bis(mercaptopropyl) disulfide, thioglycolates and mercaptopropionates thereof, hydroxymethyl sulfide bis(2-mercaptoacetate), hydroxymethyl sulfide bis(3-mercaptopropionate), hydroxyethyl sulfide (2-mercaptoacetate), hydroxyethyl sulfide bis(3-mercaptopropionate), hydroxypropyl sulfide bis(2-mercaptoacetate), hydroxypropyl sulfide bis(3-mercaptopropionate), hydroxymethyl disulfide bis(2-mercaptoacetate), hydroxymethyl disulfide bis (3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithian-2,5-diolbis(2-mercaptoacetate), 1,4-dithian-2,5-diolbis(3-mercaptopropionate), thioglycolic acid bis(2-mercaptoethyl ester), thiodipropionic acid bis(2-mercaptoethyl ester), 4,4-thiodibutylic acid bis(2-mercaptoethyl ester), dithiodiglcolic acid bis(2-mercaptoethyl ester), dithiodipropionic acid bis(2-mercaptoethyl ester), 4,4-dithiodibutylic acid bis(2-mercaptoethyl ester), thiodiglycolic acid bis(2,3-dimercaptopropyl ester), thiodipropionic acid bis(2,3-dimercaptopropyl ester), dithioglycolic acid bis(2,3-dimercaptopropyl ester) and dithiodipropionic acid (2,3-dimercaptopropyl ester); and heterocyclic compounds having one or more sulfur atoms in addition to the mercapto group such as 3,4-thiophenedithiol, 2,5-bis(mercaptomethyl)tetrahydrothiophene, bis(mercaptomethyl)-1,3-dithiolane, 2,5-dimercapto-1,3,4-thiadiazole, 2,5-dimercapto-1,4-dithian and 2,5-dimercaptomethyl-1,4-dithian.

Examples of mercapto compounds having one or more hydroxy groups include 2-mercaptoethanol, 3-mercapto-1,2-propanediol, glycelin di(mercaptoacetate), 1-hydroxy-4-mercaptocyclohexane, 2,4-dimercaptophenol, 2-mercaptohydroquinone, 4-mercaptophenol, 1,3-dimercapto-2-propanol, 2,3-dimercapto-1-propanol, 1,2-dimercapto-1,3-butanediol, pentaerythritol tris(3-mercaptopropionate), pentaerythritol mono(3-mercaptopropionate), pentaerythritol bis(3-mercaptopropionate), pentaerythritol tris(thioglycolate), pentaerythritol pentakis(3-mercaptopropionate), hydroxymethyltris(mercaptoethylthiomethyl)methane, 1-hydroxyethylthio-3-mercapto-ethylthiobenzene, 4-hydroxy-4'-mercaptodiphenylsulfone, 2-(2-mercaptoethylthio)ethanol, dihydroxyethyl sulfide mono(3-mercaptopropionate), dimercaptoethane mono(salicylate) and hydroxyethylthiomethyl-tris(mercaptoethylthio)methane.

Furthermore, these active hydrogen compounds which are substituted with halogens such as chlorine and bromine may also be used.

Of these active hydrogen compounds, particularly preferable are glycerin, thioglycerin, dithioglycerin, trithioglycerin, 3,6-dioxaoctane-1,8-dimercaptan, bis(2-mercaptoethyl) sulfide, xylylenedithiol, trimethylolpropane tris (3-mercaptopropionate), ethylene glycol bis(3-mercaptopropionate) and butanediol bis(3-mercaptopropionate), because the employment of these compounds often leads to preferable results.

These active hydrogen compounds may be used singly or in a combination of two or more thereof.

With regard to the blend ratio of the active hydrogen compound to the isocyanate compound, the molar ratio of (SH + OH)/(NCO) is preferably in the range of 0.9 to 1.1.

In some cases, if the blend ratio is less than 0.9 or more than 1.1 , a resin having a low specific gravity may not be obtained and/or the heat resistance of the resin may be impaired.

In a plastic lens of the present invention, a urethane resin is used as a raw material and it contains a urethane bond of an isocyanate group and an active hydrogen group as a main bond. Needless to say, however, the urethane resin may contain an allophanate bond, a urea bond, a thiourea bond, a biuret bond or the like in addition to the urethane bond in compliance with the use purpose of the plastic lens.

For example, the isocyanato group can be further reacted with the urethane bond, to increase crosslinking density, which often leads to preferable results. In this case, a reaction temperature is raised to 100°C or more, and a large amount of the isocyanate component is used. Alternatively, an amine can be partially used as an additional component to utilize the urea bond or the biuret bond. In the case that such a material other than the active hydrogen compound which can react with the isocyanate compound is used, it is necessary that much attention should be particularly paid to the point of coloring.

Moreover, for the purpose of modifying the resin, an olefin compound, an epoxy compound or the like may be blended.

Examples of the olefin compound include methyl methacrylate, styrene, divinylbenzene, 5-vinylbicyclo[2.2.1]hepto-2-ene, diethylene glycol bis(allyl carbonate), dicyclopentadiene, diallyl phthalate, triallyl isocyanurate, allyl methacrylate, glycerol diallyl ether, bisphenol A bis(methacryloxyethyl), glycerin dimethacrylate, butadiene, isoprene and 3-isopropenyl-$\alpha,\alpha$-dimethylbenzyl isocyanate.

Examples of the epoxy compounds include vinylcyclohexene dioxide, 2-(3,4-epoxycyclohexyl-5,5-spiro-3,4-epoxy)cyclohexane-meta-dioxane, bis(3,4-epxoycyclohexyl) adipate, 1,2-epoxy-p-vinylcyclohexene, 3,4-epoxycyclohexylmethyl-3,4-epoxycyclohexane carboxylate, triglycidyl isocyanurate, bisphenol A diglycidyl ether, hydrogenated bisphenol A diglycidyl ether, bisphenol F diglycidyl ether, hydrogenated bisphenol F diglycidyl ether, N,N,N',N'-tetraglycidyldiaminodiphenylmethane, N,N,N',N'-tetraglycidylxylylenediamine, N,N,N',N'-tetraglycidyldiaminodicyclohexylmethane, N,N,N',N'-tetraglycidylisophoronediamine, N,N-diglycidylaniline, N,N-diglycidylcyclohexylamine, trimethylolpropane triglycidyl ether, diglycidyl phthalate and diglycidyl hexahydrophthalate.

Furthermore, there can also be used the above-mentioned modifiers which are substituted with halogens such as chlorine and bromine, alkyl groups, alkoxy groups and a nitro group and which are modified into prepolymer type.

As in a known molding method, various kinds of additives may be added in compliance with a use purpose, and examples of the additives include an internal mold release agent, a chain extender, a crosslinking agent, a light stabilizer, an ultraviolet light absorber, an antioxidant, an oil-soluble dye and a filler.

In order to regulate a reaction rate into a desirable level, a known urethane reaction catalyst, radical polymerization catalyst, epoxy curing catalyst, epoxy curing agent and the like can be suitably added.

The lens of the present invention can usually be obtained by cast polymerization. Concretely, a combination of the isocyanate compound and the active hydrogen compound which meet the requirement of the formula (1) is mixed, and bubbles are then removed from the mixture by a suitable method, if necessary. Afterward, the mixture is poured into a mold, and polymerization is then carried out, while usually slowly heated from a low temperature of 0 to 50°C to a high temperature of 100 to 180°C. In this case, in order to facilitate mold release after the polymerization, a known mold release treatment may be carried out in the mold.

The thus obtained urethane resin in preferred embodiments is colorless and transparent and has a low specific gravity of 1.22 or less, a high refractive index and a low dispersion, and therefore the resin is suitable as optical elements such as lenses for spectacles and cameras, a glazing material, and materials for coating compositions and adhesives. Furthermore, in order to realize the prevention of reflection, the increase of hardness, the improvement of wear resistance and chemical resistance, the impartment of fog resistance and fashion sense, and the like, the lenses made from the urethane resin regarding the present invention, if necessary, can be subjected to a physical or a chemical treatment such as surface polishing, an antistatic treatment, a hard coat treatment, a nonreflective coat treatment, a dyeing treatment or a dimming treatment.

Next, the present invention will be described in detail with reference to examples and comparative examples. The refractive index, Abbe's number, specific gravity and appearance of obtained lenses were evaluated as follows.

The refractive index and Abbe's number were measured at 20°C by the use of a Pulfrich refractometer.

The specific gravity was measured by an Archimedes' method.

The appearance was observed with the naked eye.

Example 1

First, 46.6 parts (0.210 mole) of isophorone diisocyanate (hereinafter abbreviated to "IPDi"), 8.0 parts (0.074 mole) of thioglycerin (hereinafter abbreviated to "TG"), 12.0 parts (0.078 mole) of bis(2-mercaptoethyl) sulfide (hereinafter abbreviated to "MES") and 0.4% by weight (based on the whole mixture) of dibutyltin dichloride were mixed, and bubbles were then removed from the mixture to obtain a uniform solution. Afterward, the thus obtained solution was poured into a mold comprising a glass mold and a gasket which were subjected to a mold release treatment. Next, the mold was slowly heated from 30°C to 130°C over 24 hours to harden the same. After the completion of the polymerization, the mold was cooled, and a lens was then taken out from the mold.

The thus obtained lens was colorless and transparent, and it had a refractive index $n_d = 1.545$, an Abbe's number $\nu_d = 46$, and a specific gravity $d = 1.17$.

The value of k in the formula (1) was 0.900. Moreover, the calculated value of the formula (1) of the composition was 1.105 which was less than 1.136. The results are also shown in Table 1.

Examples 2 to 28, and Comparative Examples 1 to 7

Urethane-base plastic lenses were prepared by the same procedure as in Example 1. The results of the examples are shown in Table 1, and those of the comparative examples are shown in Table 2.

Table 1 (I)

| Example | Composition (weight ratio) | | Value of k in Formula (1) | Calculated Value of Formula (1) | $n_d$ | $\nu_d$ | Specific Gravity | Appearance |
|---|---|---|---|---|---|---|---|---|
| 1 | IPDi<br>TG<br>MES | 46.6<br>8.0<br>12.0 | 0.900 | 1.105 | 1.545 | 46 | 1.17 | Colorless &<br>Transparent |
| 2 | IPDi<br>TG<br>MES | 42.0<br>8.0<br>12.0 | 0.999 | 1.108 | 1.550 | 45 | 1.17 | Colorless &<br>Transparent |
| 3 | IPDi<br>TG<br>MES | 38.1<br>8.0<br>12.0 | 1.10 | 1.111 | 1.555 | 44 | 1.18 | Colorless &<br>Transparent |
| 4 | IPDi<br>TG<br>MES | 53.0<br>7.0<br>21.0 | 0.978 | 1.106 | 1.563 | 44 | 1.18 | Colorless &<br>Transparent |
| 5 | IPDi<br>TG<br>TMP | 44.0<br>9.0<br>18.0 | 0.973 | 1.127 | 1.533 | 47 | 1.19 | Colorless &<br>Transparent |

EP 0 676 428 B1

Table 1 (II)

| Example | Composition (weight ratio) | | Value of k in Formula (1) | Calculated Value of Formula (1) | $n_d$ | $\nu_d$ | Specific Gravity | Appearance |
|---|---|---|---|---|---|---|---|---|
| 6 | IPDi<br>TG<br>DOM | 45.1<br>8.0<br>16.0 | 0.979 | 1.098 | 1.533 | 47 | 1.19 | Colorless &<br>Transparent |
| 7 | IPDi<br>TG<br>DOM | 40.0<br>5.0<br>20.0 | 0.995 | 1.094 | 1.545 | 45 | 1.19 | Colorless &<br>Transparent |
| 8 | IPDi<br>TG<br>DOM<br>MES | 35.1<br>5.0<br>10.0<br>5.0 | 0.992 | 1.100 | 1.550 | 45 | 1.19 | Colorless &<br>Transparent |
| 9 | IPDi<br>G<br>MES | 40.0<br>5.0<br>15.0 | 0.993 | 1.109 | 1.553 | 45 | 1.18 | Colorless &<br>Transparent |
| 10 | HMDi<br>TG<br>DOM | 68.8<br>10.4<br>20.8 | 0.985 | 1.105 | 1.548 | 47 | 1.18 | Colorless &<br>Transparent |

EP 0 676 428 B1

Table 1 (III)

| Example | Composition (weight ratio) | | Value of k in Formula (1) | Calculated Value of Formula (1) | $n_d$ | $\nu_d$ | Specific Gravity | Appearance |
|---|---|---|---|---|---|---|---|---|
| 11 | HMDi<br>TG<br>DOM | 70.0<br>12.0<br>18.0 | 0.994 | 1.107 | 1.546 | 47 | 1.18 | Colorless & Transparent |
| 12 | HMDi<br>TG<br>DOM | 72.0<br>14.0<br>14.0 | 0.987 | 1.108 | 1.543 | 48 | 1.17 | Colorless & Transparent |
| 13 | HMDi<br>TG<br>MES | 53.1<br>6.0<br>18.0 | 0.987 | 1.114 | 1.567 | 45 | 1.20 | Colorless & Transparent |
| 14 | HMDi<br>G<br>MES | 55.0<br>5.0<br>20.0 | 1.01 | 1.116 | 1.565 | 45 | 1.20 | Colorless & Transparent |
| 15 | IPDi<br>TMP | 40.0<br>47.8 | 1.00 | 1.132 | 1.542 | 45 | 1.22 | Colorless & Transparent |
| 16 | HMDi<br>TMP | 40.0<br>40.5 | 1.00 | 1.135 | 1.548 | 47 | 1.21 | Colorless & Transparent |

EP 0 676 428 B1

Table 1 (IV)

| Example | Composition (weight ratio) | | Value of k in Formula (1) | Calculated Value of Formula (1) | $n_d$ | $\nu_d$ | Specific Gravity | Appearance |
|---|---|---|---|---|---|---|---|---|
| 17 | IPDi<br>HDi<br>TMP | 40.8<br>4.1<br>55.1 | 1.00 | 1.132 | 1.543 | 45 | 1.22 | Colorless & Transparent |
| 18 | IPDi<br>TMP<br>EGTP | 37.2<br>40.0<br>4.0 | 1.00 | 1.133 | 1.543 | 45 | 1.22 | Colorless & Transparent |
| 19 | IPDi<br>TMP<br>BDTP | 36.8<br>40.0<br>4.0 | 1.00 | 1.131 | 1.542 | 45 | 1.22 | Colorless & Transparent |
| 20 | TMDi<br>DTG | 51.0<br>20.0 | 0.995 | 1.068 | 1.546 | 46 | 1.19 | Colorless & Transparent |
| 21 | TMDi<br>TTG | 45.0<br>20.0 | 0.999 | 1.076 | 1.570 | 42 | 1.19 | Colorless & Transparent |
| 22 | TMDi<br>GST | 48.4<br>40.0 | 1.00 | 1.115 | 1.592 | 39 | 1.22 | Colorless & Transparent |

Table 1 (V)

| Example | Composition (weight ratio) | | Value of k in Formula (1) | Calculated Value of Formula (1) | $n_d$ | $\nu_d$ | Specific Gravity | Appearance |
|---|---|---|---|---|---|---|---|---|
| 23 | HDi<br>TTG | 54.0<br>30.0 | 0.999 | 1.114 | 1.581 | 41 | 1.21 | Colorless & Transparent |
| 24 | TMXDi<br>TTG<br>MES | 74.0<br>10.0<br>30.0 | 0.995 | 1.100 | 1.602 | 34 | 1.21 | Colorless & Transparent |
| 25 | HDI Biuret<br><br>EDT | 101.6<br>30.0 | 1.00 | 1.121 | 1.558 | 42 | 1.20 | Colorless & Transparent |
| 26 | HDI Trimer<br><br>EDT | 107.1<br>30.0 | 1.00 | 1.121 | 1.556 | 44 | 1.20 | Colorless & Transparent |
| 27 | IPDi<br>TG<br>XDT | 66.5<br>3.0<br>43.9 | 1.00 | 1.099 | 1.590 | 39 | 1.19 | Colorless & Transparent |
| 28 | HMDi<br>TG<br>XDT | 78.5<br>3.0<br>43.9 | 1.00 | 1.101 | 1.592 | 39 | 1.19 | Colorless & Transparent |

EP 0 676 428 B1

EP 0 676 428 B1

IPDi: Isophorone diisocyanate

Table 2

| Comparative Example | Composition (weight ratio) | | Value of k in Formula (1) | Calculated Value of Formula (1) | $n_d$ | $\nu_d$ | Specific Gravity | Appearance |
|---|---|---|---|---|---|---|---|---|
| 1 | IPDi<br>GST | 56.9<br>40.0 | 0.900 | 1.137 | 1.587 | 42 | 1.23 | Colorless &<br>Transparent |
| 2 | IPDi<br>GST | 51.2<br>40.0 | 1.00 | 1.143 | 1.592 | 41 | 1.23 | Colorless &<br>Transparent |
| 3 | IPDi<br>GST | 46.5<br>40.0 | 1.10 | 1.147 | 1.597 | 40 | 1.24 | Colorless &<br>Transparent |
| 4 | HMDi<br>PEMP | 42.9<br>40.0 | 1.00 | 1.169 | 1.550 | 46 | 1.24 | Colorless &<br>Transparent |
| 5 | IPDi<br>PEMP | 45.5<br>50.0 | 1.00 | 1.169 | 1.546 | 45 | 1.24 | Colorless &<br>Transparent |
| 6 | XDi<br>PEMP | 40.0<br>51.9 | 1.00 | 1.249 | 1.594 | 36 | 1.34 | Colorless &<br>Transparent |
| 7 | XDi<br>GST | 43.3<br>40.0 | 1.00 | 1.232 | 1.660 | 32 | 1.35 | Colorless &<br>Transparent |

12

HMDi:      Dicyclohexylmethane-4,4'-diisocyanate
HDi:       Hexamethylene diisocyanate
TMDi:      Trimethylhexamethylene diisocyanate
TMXDi:     $\alpha,\alpha,\alpha',\alpha'$-Tetramethylxylylene diisocyanate
XDi:       Xylylene diisocyanate
G:         Glycerin
TG:        Thioglycerin
DTG:       Dithioglycerin
TTG:       Trichioglycerin
MES:       Bis(2-mercaptoethyl) sulfide
TMP:       Trimethylolpropane tris(3-mercaptopropionate)
DOM:       3,6-Dioxaoctane-1,8-dimercaptan
EGTP:      Ethylene glycol bis(3-mercaptopropionate)
BDTP:      Butanediol bis(3-mercaptopropionate)
PEMP:      Pentaerythritol tetrakis(3-mercaptopropionate)
GST:       1,2-Bis(2-mercaptoethylthio)-3-propanethiol
EDT:       1,2-Ethanedithiol
XDT:       Xylenedithiol

As is apparent from the above-mentioned examples and comparative examples, the urethane-base plastic lenses obtained by the above-mentioned procedure have excellent optical properties and low specific gravities of 1.22 or less. Thus, according to the present invention, the plastic lenses can be obtained whose specific gravity is much lower as compared with conventional urethane-base plastic lenses.

## Claims

1.  A composition for a low-specific gravity urethane-base plastic lens which comprises (a) an isocyanate compound which is one or more compounds selected from isophorone diisocyanate, dicyclohexylmethane diisocyanate, tri-methylhexamethylene diisocyanate, hexamethylene diisocyanate, $\alpha,\alpha,\alpha',\alpha'$-tetramethylxylylene diisocyanate and these isocyanates when modified with biuret and trimerized; and (b) an active hydrogen compound selected so as to meet the formula (1)

$$\frac{(A1 + kA2)D1 \times D2}{A1 \times D2 + kA2 \times D1} \leq 1.136 \qquad (1)$$

wherein

$$A1 = \frac{A1\text{-}M}{A1\text{-}N}$$

A1-M:    the molecular weight of the isocyanate compound, and
A1-N:    the number of functional groups of the isocyanate compound,

$$A2 = \frac{A2\text{-}M}{A2\text{-}N}$$

A2-M:    the molecular weight of the active hydrogen compound, and
A2-N:    the number of functional groups of the active hydrogen compound,
D1 =     the specific gravity of the isocyanate compound,
D2 =     the specific gravity of the active hydrogen compound, and

$$k = \frac{\text{mole number of an active hydrogen group}}{\text{mole number of the isocyanate group}}.$$

2.  The composition according to Claim 1 wherein k is in the range of 0.9 to 1.1.

3.  The composition according to Claim 1 or 2 wherein the active hydrogen compound is one or more selected from hydroxy compounds and mercapto compounds which may have a hydroxy group.

4. The composition according to any preceding claim wherein the active hydrogen compound is one or more selected from glycerin, thioglycerin, dithioglycerin, trithioglycerin, 3,6-dioxaoctane-1,8-dimercaptan, bis(2-mercaptoethyl) sulfide, xylylenedithiol, trimethylolpropane tris(3-mercaptopropionate), ethylene glycol bis(3-mercaptopropionate) and butanediol bis(3-mercaptopropionate).

5. A process for preparing a low-specific gravity urethane-base plastic lens which comprises heating and hardening the composition of any preceding claim in a mold.

6. A low-specific gravity urethane-base plastic lens obtainable by the process of Claim 5.


**Patentansprüche**

1. Zusammensetzung für Kunststofflinsen mit niedrigem spezifischem Gewicht auf Urethanbasis, aufweisend

   (a) eine oder mehrere Isocyanatverbindungen, ausgewählt aus Isophorondiisocyanat, Dicyclohexyl-methan-diisocyanat, Trimethylhexamethylendiissocyanat, Hexamethylendiisocyanat, $\alpha,\alpha,\alpha',\alpha'$-Tetramethylxylylendi-isocyanat und diesen Isocyanaten modifiziert mit Biuret und trimerisiert; und

   (b) eine aktive Wasserstoffverbindung ausgewählt, so daß sie die Formel (1) erfüllt

$$\frac{(A1+kA2)D1xD2}{A1xD2+kA2xD1} \leq 1,136 \tag{1}$$

   *worin*

$$A1 = \frac{A1\text{-}M}{A1\text{-}N}$$

   A1-M:  das Molekulargewicht der Isocyanatverbindung , und

   A1-N:  die Zahl der funkionellen Gruppen der Isocyanatverbindung,

$$A2 = \frac{A2\text{-}M}{A2\text{-}N}$$

   A2-M:  das Molekulargewicht der aktiven Wasserstoffverbindung, und

   A2-N:  die Zahl der funktionellen Gruppen der aktiven Wasserstoffverbindung,

   D1 =  das spezifische Gewicht der Isocyanatverbindung,

   D2 =  das spezifische Gewicht der aktiven Wasserstoffverbindung, und

$$k = \frac{Molzahl\ einer\ aktiven\ Wasserstoffgruppe}{Molzahl\ der\ Isocyanatgruppe}.$$

2. Zusammensetzung nach Anspruch 1, dadurch gekennzeichnet, daß k im Bereich von 0,9 bis 1,1 ist.

3. Zusammensetzung nach Anspruch 1 oder 2, dadurch gekennzeichnet, daß die aktive Wasserstoffverbindung eine oder mehr ist ausgewählt aus Hydroxyverbindungen und Mercaptoverbindungen, die eine Hydroxygruppe haben können.

4. Zusammensetzung nach einem beliebigen der vorhergehenden Ansprüche, dadurch gekennzeichnet, daß die aktive Wasserstoffverbindung eine oder mehr ist ausgewählt aus Glycerin, Thioglycerin, Dithioglycerin, Trithioglycerin, 3,6-Dioxaoctan-1,8-dimercaptan, Bis(2-mercaptoethyl)sulfid, Xylylendithiol, Trimethylpropantris(3-mercaptoproprionat), Ethylenglykolbis(3-mercaptopropionat) und Butandiolbis(3-mercaptopropionat).

5. Verfahren zur Herstellung einer Kunststofflinse mit niedrigem spezifischem Gewicht auf Urethanbasis, welches aufweist, daß man die Zusammensetzung nach einem beliebigen der vorhergehenden Ansprüche in einer Form erhitzt und härtet.

6. Eine Kunststofflinse mit niedrigem spezifischem Gewicht auf Urethanbasis erhältlich durch das Verfahren nach Anspruch 5.

**Revendications**

1. Composition pour une lentille en plastique de faible densité à base d'uréthane, qui comprend (a) un isocyanate qui est constitué d'un ou plusieurs composés choisis parmi le diisocyanate d'isophorone, le diisocyanate de dicyclohexylméthane, le diisocyanate de triméthylhexaméthylène, le diisocyanate d'hexaméthylène, le diisocyanate d'$\alpha,\alpha,\alpha',\alpha'$-tétraméthylxylylène et ces isocyanates modifiés avec du biuret et trimérisés; et (b) un composé à hydrogène actif choisi de manière qu'il satisfasse à la formule (1):

$$\frac{(A1+kA2)D1\times D2}{A1\times D2+kA2\times D1} \leq 1,136 \tag{1}$$

dans laquelle

$$A1 = \frac{A1\text{-}M}{A1\text{-}N}$$

A1-M: masse molaire de l'isocyanate, et
A1-N: nombre de groupes fonctionnels de l'isocyanate,

$$A2 = \frac{A2\text{-}M}{A2\text{-}N}$$

A2-M: masse molaire du composé à hydrogène actif, et
A2-N: nombre de groupes fonctionnels du composé à hydrogène actif,
D1 = densité de l'isocyanate,
D2 = densité du composé à hydrogène actif, et

$$k = \frac{\text{nombre de mol de groupes à hydrogène actif}}{\text{nombre de mol de groupes isocyanate}}.$$

2. Composition selon la revendication 1, dans laquelle k est compris entre 0,9 et 1,1.

3. Composition selon la revendication 1 ou 2, dans laquelle le composé à hydrogène actif est constitué d'un ou plusieurs composés choisis parmi des composés hydroxylés et des composés mercapto pouvant avoir un groupe hydroxy.

4. Composition selon l'une quelconque des revendications précédentes, dans laquelle le composé à hydrogène actif est constitué d'un ou plusieurs composés choisis parmi le glycérol, le thioglycérol, le dithioglycérol, le trithioglycérol, le 3,6-dioxaoctane-1,8-dimercaptan, le sulfure de bis(2-mercaptoéthyle), le xylylènedithiol, le tris(3-mercaptopropionate) du triméthylolpropane, le bis(3-mercaptopropionate) de l'éthylèneglycol et le bis(3-mercaptopropionate) du butanediol.

5. Procédé de préparation d'une lentille en plastique de faible densité à base d'uréthane, qui comprend le chauffage et le durcissement d'une composition selon l'une quelconque des revendications précédentes dans un moule.

6. Lentille en plastique de faible densité à base d'uréthane, pouvant être obtenue par le procédé selon la revendication 5.